# EUROPÄISCHE PATENTSCHRIFT

(11) **EP 2 908 981 B1**
(45) Veröffentlichungstag und Bekanntmachung des Hinweises auf die Patenterteilung: **21.12.2016**
(21) Anmeldenummer: 13779241.2
(22) Anmeldetag: 18.10.2013
(51) Int. Cl.: B23K 37/02, B23K 37/04, B23K 26/08, B23K 26/36, B23K 26/38

(54) **VERFAHREN UND BEARBEITUNGSMASCHINE ZUM EINSTECHEN, BOHREN ODER SCHNEIDEN METALLISCHER WERKSTÜCKE MIT ERMITTELN DER INTENSITÄT DER PROZESSSTRAHLUNG**
METHOD AND PROCESSING MACHINE FOR GROOVING, DRILLING OR CUTTING METAL WORKPIECES, WITH DETERMINATION OF THE INTENSITY OF THE PROCESS RADIATION
MÉTHODE ET MACHINE D'USINAGE POUR RAINURER, PERCER OU DÉCOUPER DES PIÈCES MÉTALLIQUES, AVEC DÉTERMINATION DE L'INTENSITÉ DE LA RADIATION D'USINAGE

(30) Priorität: 22.10.2012 DE 102012219196
(43) Veröffentlichungstag der Anmeldung: 26.08.2015
(60) Teilanmeldung: 16196169.3
(73) Patentinhaber: Trumpf Werkzeugmaschinen GmbH + Co. KG, 71254 Ditzingen (DE)
(72) Erfinder: SPIESS, Martin, 70839 Gerlingen (DE); BLASCHKA, Markus, 71101 Schönaich (DE)
(74) Vertreter: Kohler Schmid Möbus Patentanwälte
(86) Internationale Anmeldenummer: PCT/EP2013/071897
(87) Internationale Veröffentlichungsnummer: WO 2014/064017

(56) Entgegenhaltungen:
- DE-A1- 10 305 876
- DE-A1-102008 047 760
- US-A- 4 789 770
- US-A1- 2005 103 763
- US-A1- 2010 292 679

## Beschreibung

Die vorliegende Erfindung betrifft ein Verfahren zum Einstechen, Bohren oder Schneiden eines metallischen Werkstücks in einem Laserbearbeitungsprozess, umfassend: Fokussieren eines gepulsten Laserstrahls auf einen Bearbeitungsort am Werkstück, sowie Erfassen von vom Bearbeitungsort ausgehender Prozessstrahlung (siehe, z.B., DE103 05 876 A1).

Die Erfindung betrifft auch eine Bearbeitungsmaschine zur Durchführung des Verfahrens, umfassend: eine Laserquelle zur Erzeugung eines gepulsten Laserstrahls, eine Fokussiereinrichtung zum Fokussieren des Laserstrahls auf einen Bearbeitungsort am Werkstück, sowie eine Messeinrichtung zum Erfassen von Prozessstrahlung, die vom Bearbeitungsort am Werkstück ausgeht (siehe auch, z.B., DE103 05 876 A1).

Beim Einstechen, Bohren und Schneiden in metallische Werkstück-Materialien mit einem Laserstrahl kann es - insbesondere bei der Unterstützung des Bearbeitungsprozesses mit Sauerstoff als Prozessgas - zu spontanen, in der Regel unerwünschten Materialabtragprozessen kommen. Beim Einstechen kann der spontane Materialabtrag so heftig sein, dass inakzeptabel große Partikelmengen abgetragen werden. Der spontane Materialabtrag kann zudem bei Laserbearbeitungsmaschinen zu einer Verschmutzung, einer Beschädigung oder sogar zur Zerstörung der prozessnahen optischen Elemente und der Bearbeitungsdüsen führen.

In der JP2003251477A sind eine Laserbearbeitungsvorrichtung und ein Laserbearbeitungsverfahren zum Erzeugen eines Loches beschrieben, die zum Erkennen eines Fehlers unmittelbar nach der Erzeugung eines fehlerhaften Loches ausgebildet sind. Zu diesem Zweck wird ein Teil des gepulsten Bearbeitungslaserstrahls abgezweigt. Die Pulsenergie bzw. Pulsleistung des abgezweigten Teilstrahls wird integriert und der integrierte Wert wird mit einem vorgebebenen zulässigen Energielevel verglichen, der zur Erzeugung des Loches erforderlich ist.

In der JP8010976A ist ein Verfahren zum Einstechen in ein Werkstück beschrieben, bei dem die Intensität von am Werkstück reflektierter Strahlung detektiert und mit einem Schwellwert verglichen wird, um zu entscheiden, ob der Einstechvorgang beendet ist.

Auch ist aus DE3926859A1, DE4336136A1, EP0470583B1, JP06091384A und JP06246466A bekannt, das Auftreten spontaner Materialabtragprozesse ("Blow up") und/oder die Beendigung des Einstechvorgangs durch Messen der vom Werkstück ausgehenden (Prozess-)Strahlung zu detektieren. In diesen Schriften wird vorgeschlagen, das Auftreten eines unerwünschten Prozesszustands durch einen Vergleich der kontinuierlich detektierten Lichtmenge mit einem zuvor festgelegten Referenz- oder Grenzwert zu detektieren. Beim Überschreiten des Grenzwerts können durch die Steuerung der Bearbeitungsmaschine die Bearbeitungsparameter geändert werden, um den spontanen Materialabtrag zu verhindern. Bei deutlicher Überschreitung des Grenzwerts wird die Bearbeitung gestoppt.

Die DE 103 05 876 A1 beschreibt ein Verfahren zur kontrollierten Erzeugung von Abtragsgeometrien, bei dem das Prozessleuchten gemessen und mit der dazu korrelierten Bewegung des Laserfokus verglichen wird. Durch zyklisches Abtasten einer Abtragfläche einer durch Materialabtrag entstehenden Abtragstelle durch den Laserfokus ist eine Abtraggeometrie ausmessbar und der Laserfokus kann in geeigneter Weise gesteuert werden.

Aus der US 2010/029679 A1 sind ein Verfahren und eine Vorrichtung bekannt geworden, bei denen ein kontrollierter Materialabtrag unter Verwendung von Laserpulsen mit kurzen Wellenlängen und Pulsbreiten erfolgt.

In der US 4,789,770 A ist ein Verfahren zum kontrollierten Laser-Tiefenbohren eines Werkstücks beschrieben. Bei dem Verfahren wird ein Teil des Laserstrahls vom Werkstück zurück zu einer Bohrtiefen-Überwachungseinrichtung reflektiert, die eine optische Einrichtung aufweist, die ausgebildet ist, einen Anteil des ursprünglichen und des reflektierten Laserstrahls in eine Strahlungs-Detektoreinrichtung zu reflektieren. Die Strahlungs-Detektoreinrichtung ist ausgebildet, die aufgenommene Strahlung in ein elektrisch messbares Signal umzuwandeln.

Es wird angestrebt, die für das Einstechen oder Bohren eines Lochs notwendige Zeit möglichst kurz zu halten, um die Produktivität der Laserbearbeitungsmaschine zu erhöhen. Diese Zeit kann jedoch nicht beliebig verkürzt werden, ohne die Qualität des Einstichloches stark zu mindern, da es bei einem zu hohen Energieeintrag zu den oben beschriebenen spontanen Materialabtragprozessen kommt.

### Aufgabe der Erfindung

Der vorliegenden Erfindung stellt sich die Aufgabe, ein Verfahren und eine Bearbeitungsmaschine bereitzustellen, welche das Detektieren und insbesondere die Kontrolle spontaner Materialabtragprozesse beim Einstechen, Bohren oder Schneiden von Werkstücken während eines Laserbearbeitungsprozesses ermöglichen.

### Gegenstand der Erfindung

Ein erster Aspekt der Erfindung betrifft ein Verfahren der eingangs genannten Art, weiter umfassend die Schritte: Ermitteln eines Zeitpunkts, an dem auf einen Laserpuls des gepulsten Laserstrahls eine Pulspause folgt, Ermitteln der Intensität der Prozessstrahlung an mehreren aufeinander folgenden Zeitpunkten während der Pulspause, mehrfaches Bestimmen eines Gradienten der Intensität der Prozessstrahlung zwischen jeweils zwei der aufeinander folgenden Zeitpunkte und Vergleichen des Gradienten mit einem Gradienten-Schwellwert, sowie Detektieren eines spontanen Materialabtrags am Werkstück, wenn die Zahl der Schwellwert-Überschreitungen des auf die oben beschriebene Weise bestimmten Gradienten über einem Grenzwert liegt, siehe Anspruch 1.

Die vom Bearbeitungsort am Werkstück emittierte Prozessstrahlung, deren Wellenlänge typischer Weise im infraroten Wellenlängenbereich liegt, wird während des Laserbearbeitungsprozesses kontinuierlich bzw. quasi-kontinuierlich (d.h. mit hohen Abtastraten in der Größenordnung von beispielsweise ca. 100 Mikrosekunden) an aufeinander folgenden Messzeitpunkten erfasst bzw. deren Intensität wird bestimmt.

Der exakte Startzeitpunkt und Endzeitpunkt des Zeitintervalls, in dem eine Pulspause auf einen Laserpuls folgt, wird typischer Weise anhand von Laserparametern einer Laser-Steuerungseinrichtung ermittelt, welche die Pulsfrequenz sowie das Tastverhältnis des gepulsten Laserstrahls vorgibt. Während der Pulspause, d.h. des Teilintervalls der Periodendauer, in welcher der Laserstrahl nicht auf das Werkstück einwirkt, weist die Intensität der Prozessstrahlung ein Abklingverhalten auf, anhand dessen eine Aussage über die momentane Stabilität bzw. Instabilität des Laserbearbeitungsprozesses getroffen werden kann:
Folgt der zeitliche Verlauf der Prozessstrahlungsintensität nicht der Determinierung durch die eingebrachte Laserleistung, ist dies ein Hinweis darauf, dass der Prozess einen gewissen Grad an Eigendynamik erreicht, d.h. es kommt zu einem spontanen, explosionsartigen Materialabtrag. Wird ein solcher spontaner Materialabtrag detektiert, kann auf den Laserprozess eingewirkt werden, um den Bearbeitungsprozess zu stabilisieren. Um die Einstechzeit zu reduzieren, ist es aber auch möglich, den Laserbearbeitungsprozess gezielt so zu steuern, dass ein spontaner Materialabtrag auftritt, wie weiter unten näher dargestellt wird.

Der Gradient der Intensität der Prozessstrahlung stellt ein Maß für das Abklingverhalten dar und sollte bei einem stabilen bzw. unkritischen Laserbearbeitungsprozess in der Pulspause einen hinreichend großen (negativen) Wert annehmen. Der Gradient der Intensität der Prozessstrahlung wird dabei quasikontinuierlich durch Differenzbildung der bei zwei unmittelbar aufeinanderfolgenden Abtastzeitpunkten (bzw. Messzeitpunkten) gemessenen Intensität der Prozessstr ahlung bestimmt. Die Abtastzeitpunkte liegen typischer Weise in einem (konstanten) zeitlichen Abstand von beispielsweise 100µs. Wenn der auf die oben beschriebene Weise ermittelte Gradient mehrmals, d.h. über mehrere Abtastzeitpunkte hinweg, nicht einen hinreichend großen negativen Wert (Gradienten-Schwellwert) annimmt, so wird ein kritischer Materialabtrag erkannt. Die Häufigkeit der Überschreitungen des (negativen) Schwellwerts und damit die Zeitdauer der Überschreitung ist also das Kennzeichen für einen kritischen Materialabtrag.

Der Gradienten-Schwellwert für die Steigung des Gradienten sowie der Grenzwert für die Zahl der erlaubten Überschreitungen des Gradienten-Schwellwerts können in einer Auswerteeinheit, durch die die Auswertung der gemessenen Intensität erfolgt, hinterlegt sein. Diese Daten können auch an einem anderen Ort bzw. in einer anderen Einrichtung hinterlegt sein, mit der die Auswerteeinheit in signaltechnischer Verbindung steht. Die Daten können beispielsweise durch Testmessungen, d.h. durch Bohr-, Einstech- oder Schneidversuche an Testwerkstücken mit typischen Laser- und Prozessparametern, ermittelt werden. Durch die Wahl des Schwellwerts und des Grenzwerts für die Zahl der erlaubten Überschreitungen wird letztlich eine Zielqualität des Laserbearbeitungsprozesses eingestellt.

In der Regel wird die weiter oben beschriebene Detektion eines spontanen Materialabtrags für jeden Laserpuls und jede nachfolgende Pulspause des Laserbearbeitungsprozesses vorgenommen. Typische Puls-Frequenzen des gepulsten Laserstrahls liegen im Bereich zwischen ca. 1 Hz und unterhalb von Schneidfrequenzen (ca. 5000 Hz). Es ist aber auch möglich, von diesem Bereich nach unten (in den so genannten "ultra-low-Hz"-Bereich) oder nach oben, d.h. in den Multikilohertz oder sogar in den Megahertz-Bereich abzuweichen. Abhängig von der Geschwindigkeit der zur Verfügung stehenden Datenverarbeitung kann insbesondere bei hohen Pulsfrequenzen die Auswertung ggf. nur bei jedem zweiten, dritten,... Laserpuls (und der nachfolgenden Pulspause) erfolgen.

Bevorzugt wird in einer Erweiterung des erfindungsgemäßen Verfahrens fortlaufend eine über die bisherige Dauer des Laserbearbeitungsprozesses gemittelte Intensität der erfassten Prozessstrahlung bestimmt und zum Detektieren eines spontanen Materialabtrags die Intensität der Prozessstrahlung in der Prozesspause, insbesondere am Ende der Prozesspause, mit einem von der gemittelten Intensität abhängigen Intensitäts-Schwellwert verglichen. Neben dem Gradienten der Prozessstrahlung in der Pulspause ist auf diese Weise auch der Absolutwert der Prozessstrahlung in der Pulspause für das Auftreten oder Nicht-Auftreten eines spontanen Materialabtrags relevant. Bei der Prüfung auf das Vorliegen oder Nicht-Vorliegen eines spontanen Materialabtrags kann also zusätzlich zur Prüfung anhand des Gradienten auch geprüft werden, ob der Absolutwert der Intensität der Prozessstrahlung in der Pulspause unter die über die gesamte bisherige Dauer des Laserbearbeitungsprozesses gemittelte Intensität bzw. einen aus dieser Intensität je nach zu erreichender Zielqualität durch Gewichtung mit prozessspezifischen Faktoren bestimmten Intensitäts-Schwellwert fällt oder nicht.

Zur Bestimmung der gemittelten Intensität (auch Prozesskurve genannt) wird die zu den jeweiligen Abtastzeitpunkten bzw. Messzeitpunkten detektierte Intensität der Prozessstrahlung vom Beginn des Bearbeitungsprozesses, beispielsweise vom Beginn des Einstechens an, aufsummiert und durch die Anzahl der bisherigen Messzeitpunkte seit dem Prozessbeginn geteilt. Der momentane Wert der seit Prozessbeginn gemittelten Intensität kann für den Vergleich mit der (momentanen) Intensität der Prozessstrahlung geeignet gewichtet werden, um Einflussfaktoren zu berücksichtigen, welche die Stabilität des Laserbearbeitungsprozesses bzw. den spontanen Materialabtrag beeinflussen, beispielsweise die Art des metallischen Materials. Auch ist zu berücksichtigen, dass der Wert der detektierten Prozessstrahlung von der maximalen Leistung des verwendeten Lasers abhängig ist: Ein 8 kW-Laser erzeugt beispielsweise mehr Prozesslicht als ein 5 kW-Laser.

Bei einer Variante wird beim Detektieren eines spontanen Materialabtrags mindestens ein Laserparameter des gepulsten Laserstrahls geändert, um den Laserbearbeitungsprozess zu stabilisieren. Geeignete Parameter sind die Pulsdauer des nachfolgenden Laserpulses sowie die Dauer der Pulspause, weiche verringert bzw. erhöht werden können, um die eingestrahlte Laserleistung zu reduzieren. Bei der Beeinflussung dieser Parameter wird typischer Weise das Tastverhältnis, d.h. der Quotient aus der Dauer des Laserpulses und der Gesamtperiodendauer (d.h. Summe der Dauer von Laserpuls und Pulspause) verringert.

Bei einer Weiterbildung dieser Variante wird beim Vorliegen eines spontanen Materialabtrags ein erneutes Einwirken des gepulsten Laserstrahls auf das Werkstück verzögert oder ggf. ganz unterbunden. Beispielsweise kann die Pulspause so lange verlängert werden, bis die momentan detektierte Intensität der Prozessstrahlung unter die über den bisherigen Prozessverlauf gemittelte Intensität abfällt. Gegebenenfalls kann die Energiezufuhr des Lasers unterbrochen werden, um den Prozess anzuhalten oder es können einzelne Laserpulse in der Pulsfolge ausgelassen werden, d.h. ein neuer Laserpuls wird z.B. erst nach einer oder zwei Periodendauern erzeugt, in denen keine Laserstrahlung auf das Werkstück einwirkt.

Bei dieser Verfahrensvariante wird ein neuer Laserpuls insgesamt also erst dann gesetzt, wenn die drei folgenden Bedingungen erfüllt sind:
- Die Bewertung des Gradienten der Intensität deutet nicht auf einen explosionsartigen Materialabtrag hin.
- Die detektierte Intensität der Prozessstrahlung liegt unter dem Wert der Prozesskurve.
- Die Dauer der Pulspause entsprechend der Sollleistung / Sollfrequenz der Laserleistung ist abgelaufen.

Bei einer weiteren Variante wird beim Vorliegen eines spontanen Materialabtrags mindestens ein Bearbeitungsparameter des Laserbearbeitungsprozesses geändert, um den Bearbeitungsprozess in einen stabilen Zustand überzuführen bzw. um die Folgen des spontanen Materialabtrags insbesondere für dem Bearbeitungsort benachbarte Bauelemente, z.B. optische Elemente oder Bearbeitungsdüsen, zu mildern. Unter den Bearbeitungsparametern werden vorliegend Parameter des Laserbearbeitungsprozesses verstanden, die nicht direkt mit der Erzeugung des Laserstrahls zu tun haben, beispielsweise die Art bzw. das Mischungsverhältnis der verwendeten Prozessgase. Beispielsweise kann die dem Prozess zur Verfügung gestellte Menge an Sauerstoff reduziert werden, um dem Prozess teilweise oder ggf. vollständig die aktive Komponente zu entziehen.

Einen weiteren Bearbeitungsparameter stellt der so genannte Prozessabstand dar, d.h. der Abstand zwischen dem verwendeten Laserbearbeitungskopf bzw. der Fokussieroptik und der Oberfläche des Werkstücks. Durch die Erhöhung des Abstands zwischen dem Laser-Bearbeitungskopf und dem Werkstück können prozessnahe Bauteile vor beim spontanen Materialabtrag erzeugten heißen Partikeln geschützt werden, die vom Bearbeitungsort in Richtung auf den Bearbeitungskopf geschleudert werden.

In einer alternativen Variante wird beim Detektieren eines spontanen Materialabtrags mindestens ein Laserparameter des gepulsten Laserstrahls und/oder mindestens ein Bearbeitungsparameter des Laserbearbeitungsprozesses erst beim einmaligen oder beim mehrfachen Überschreiten eines Duldungs-Schwellwerts des Gradienten der Intensität der detektierten Prozessstrahlung geändert. In diesem Fall wird der Laserbearbeitungsprozess (durch Erhöhung der Sauerstoffzufuhr und/oder durch Erhöhung der Laserleistung) gezielt so gesteuert, dass ein spontaner, explosiver Materialabtrag erfolgt. Das Vorliegen eines spontanen Materialabtrags kann auf die oben beschriebene Weise detektiert werden und bis zu einem vorgegebenen Duldungs-Schwellwert oder Duldungs-Grenzwert (Qualitätseinstellung) zugelassen werden.

Der Duldungs-Schwellwert entspricht typischer Weise einem vorbestimmten Schwellwert des Gradienten der Prozessstrahlung in der Pulspause und der Duldungs-Grenzwert einer festgelegten Anzahl an Überschreitungen dieses Duldungs-Schwellwerts. Erst wenn der Duldungs-Schwellwert bzw. der Duldungs-Grenzwert überschritten werden, ist die Materialreaktion zu kritisch und es wird auf die weiter oben beschriebene Weise in den Prozess eingegriffen, um den Laserbearbeitungsprozess zu stabilisieren. Der Duldungs-Schwellwert und der Duldungs-Grenzwert können abhängig von der gewünschten Qualität der Bearbeitung, insbesondere des Einstichs, in ihrem Betrag variiert werden, um unterschiedlich schnelle, sich in ihrer Qualität unterscheidende Einstichergebnisse zu erzielen. Auf diese Weise kann ein explosionsunterstütztes Einstechen in ein Werkstück mit besonders kurzen Einstechzeiten realisiert werden. Das beschleunigte Einstechen wurde bei Edelstahl (rostfreiem Stahl) bei vergleichsweise großen Werkstückdicken zwischen ca. 15 mm Edelstahl und ca. 50 mm erprobt. Es versteht sich, dass dieses Verfahren auch für andere Materialien bzw. Werkstückdicken eingesetzt werden kann.

Bei einer weiteren Variante umfasst das Verfahren zusätzlich: Ausrichten eines parallel zur Strahlrichtung des Laserstrahls verlaufenden Prozessgasstrahls auf den Bearbeitungsort, wobei zusätzlich ein unter einem Winkel zur Strahlrichtung des Laserstrahls verlaufender Hilfsgasstrahl auf den Bearbeitungsort ausgerichtet wird, wenn anhand der erfassten Prozessstrahlung ein spontaner Materialabtrag detektiert wird.

Bei dieser Variante wird beim Detektieren eines spontanen Materialabtrags die Sauerstoffmenge am Bearbeitungsort reduziert, indem der Hilfsgasstrahl durch Aktivieren einer Hilfsgasdüse erzeugt wird, d.h. es wird ein mit der Hilfsgasdüse in Verbindung stehendes Ventil angesteuert und geöffnet, um den Hilfsgasstrahl auf den Bearbeitungsort zu richten. Typischer Weise weist der Hilfsgasstrahl einen geringeren Sauerstoffanteil auf als der Prozessgasstrahl, um dem Bearbeitungsprozess die aktive Komponente teilweise oder vollständig zu entziehen. Durch die Verwendung des Hilfsgasstrahls kann typischer Weise schneller in den Bearbeitungsprozess eingegriffen werden als durch die Reduzierung des Sauerstoffanteils bzw. des Mischungsverhältnisses des zur Erzeugung des Prozessgasstrahls verwendeten Prozessgases.

Die Detektion des spontanen Materialabtrags anhand der erfassten Prozessstrahlung erfolgt durch einen Vergleich der detektierten Lichtmenge bzw. Intensität der Prozessstrahlung mit einem Referenz- oder Grenzwert, wobei beim Erreichen bzw. beim Überschreiten des Referenz- oder Grenzwerts ein spontaner Materialabtrag detektiert wird. Während des Einwirkens des Hilfsgasstrahls auf den Bearbeitungsort wird weiterhin die Prozessstrahlung detektiert. Fällt die detektierte Lichtmenge unter den zuvor festgelegten Grenzwert, wird der Hilfsgasstrahl wieder abgeschaltet. Um die Prozesssicherheit zu erhöhen, kann ggf. zusätzlich eine Mindestzeitdauer für die Einwirkung des Hilfsgasstrahls bzw. des Hilfsgases auf den Prozess festgelegt werden.

Bei einer weiteren Variante ist der Prozessgasstrahl ein Sauerstoff-Strahl und der Hilfsgasstrahl ist ein Edelgasstrahl, ein Stickstoffstrahl oder ein (Druck-)Luftstrahl. Bei dem Edelgasstrahl kann es sich insbesondere um ein Edelgas-Sauerstoff-Gemisch handeln. Auch der Stickstoffstrahl kann aus einem Stickstoff-Sauerstoff-Gemisch, insbesondere Druckluft, gebildet sein.

Bei einer Variante wird der Hilfsgasstrahl mit höherem Druck auf den Bearbeitungsort gerichtet als der Prozessgasstrahl. In diesem Fall wird die Verdrängung des Prozessgases durch das Hilfsgas am Bearbeitungsort verstärkt und es kann ein effektives "Löschen" der Eisen-Sauerstoff-Reaktion erfolgen. Der Druck des Hilfsgasstrahls an der Austrittsöffnung der Hilfsgasdüse sollte vorteilhafter Weise mehr als ca. 0,5 bar über dem Druck des Prozessgasstrahls an der Austrittsöffnung der Bearbeitungsdüse liegen. Der Druck des Hilfsgasstrahls kann gleichbleibend sein oder ggf. stufenweise oder kontinuierlich erhöht werden, bis die Eisen-Sauerstoff-Reaktion "gelöscht" ist.

In einer Variante wird beim Detektieren des spontanen Materialabtrags ein Volumenstrom des Prozessgasstrahls reduziert, d.h. es wird die dem Bearbeitungsort pro Zeiteinheit zugeführte Menge des Prozessgases reduziert, um die Schnelligkeit des Eingriffs in den Bearbeitungsprozess zu erhöhen. Die Reduzierung und ggf. das vollständige Abschalten des Prozessgasstrahls ist insbesondere günstig, wenn der Bearbeitungsprozess stark instabil ist. Bei geringfügigen Instabilitäten des Bearbeitungsprozesses kann das Prozessgas bzw. der Prozessgasstrahl hingegen unverändert bleiben, damit nach Abschaltung des Hilfsgases der Bearbeitungsprozess schnell in seinen Ausgangszustand zurückkehrt. Ein weiterer Aspekt der Erfindung betrifft eine Bearbeitungsmaschine der eingangs genannten Art zum Einstechen, Bohren oder Schneiden von metallischen Werkstücken in einem Laserbearbeitungsprozess, weiter umfassend: eine Auswerteeinrichtung, die zur Bestimmung eines Zeitpunkts, an dem auf einen Laserpuls des gepulsten Laserstrahls eine Pulspause folgt, mit der Laserquelle in Verbindung steht, wobei die Auswerteeinrichtung zum Ermitteln der Intensität der erfassten Prozessstrahlung an mehreren aufeinander folgenden Zeitpunkten während der Pulspause ausgebildet ist, und wobei die Auswerteeinrichtung ausgebildet ist, mehrfach zeitlich hintereinander einen Gradienten der Intensität der Prozessstrahlung zwischen jeweils zwei der zeitlich aufeinander folgenden Zeitpunkte zu bestimmen und den Gradienten mit einem Gradienten-Schwellwert zu vergleichen, sowie die Zahl der Überschreitungen des Gradienten-Schwellwerts zu erfassen und mit einem vorgegebenen Grenzwert zu vergleichen, um einen spontanen Materialabtrag am Werkstück zu detektieren, siehe Anspruch 11.

Die Auswerteeinrichtung weist typischer Weise eine Daten-Schnittstelle zur Kommunikation mit der Laserquelle, genauer gesagt mit einer Steuerungseinrichtung der Laserquelle auf, um Informationen über den derzeitigen Status der Lasers (Pulsphase/Pulspause bzw. deren Anfang und Ende) zu erhalten und um in die Laserleistungszufuhr einzugreifen. Wie weiter oben im Zusammenhang mit dem Verfahren beschrieben, wird das Abklingverhalten der Intensität der Prozessstrahlung in der Pulspause verwendet, um das Vorliegen eines spontanen Materialabtrags zu detektieren. Als Messeinrichtung kann ein Sensorelement dienen, beispielsweise eine Photo-Diode oder eine Kamera, um Prozessstrahlung im infraroten Wellenlängenbereich zu detektieren, anhand derer der Laserbearbeitungsprozess, genauer gesagt dessen Stabilität, beurteilt werden kann.

Bei einer Ausführungsform ist die Auswerteeinrichtung ausgebildet, fortlaufend eine über die bisherige Dauer des Laserbearbeitungsprozesses gemittelte Intensität der erfassten Prozessstrahlung zu bestimmen und zum Detektieren des spontanen Materialabtrags die Intensität der Prozessstrahlung in der Pulspause mit einem von der gemittelten Intensität abhängigen (ggf. der gemittelten Intensität bis auf Gewichtungsfaktoren entsprechenden) Intensitäts-Schwellwert zu vergleichen. Sofern die Intensität der Prozessstrahlung noch nicht auf den vorgegebenen Intensitäts-Schwellwert abgesunken ist, kann ggf. die Pulspause verlängert werden, bis der Intensitäts-Schwellwert erreicht ist.

In einer weiteren Ausführungsform steht die Auswerteeinrichtung zur Beeinflussung mindestens eines Laserparameters des gepulsten Laserstrahls mit einer Steuerungseinrichtung der Laserquelle und/oder zur Beeinflussung von Bearbeitungsparametern des Laserprozesses mit einer Maschinensteuerung in Verbindung. Die (signaltechnische) Verbindung mit der Steuerungseinrichtung bzw. mit der Maschinensteuerung kann über eine jeweilige Daten-Schnittstellen erfolgen. Durch die Einflussnahme auf den Laserbearbeitungsprozess kann eine Steuerung bzw. Regelung des Bearbeitungsprozesses vorgenommen werden.

In einer weiteren Ausführungsform ist die Auswerteeinrichtung ausgebildet, beim Detektieren eines spontanen Materialabtrags am Werkstück mindestens einen Laserparameter des gepulsten Laserstrahls und/oder mindestens einen Bearbeitungsparameter des Laserbearbeitungsprozesses zu verändern. Es wird somit aktiv in die Steuerung bzw. Regelung des Laserbearbeitungsprozesses eingegriffen.

Die Steuerung bzw. die Regelung des Laserbearbeitungsprozesses kann beispielsweise vorsehen, dass in bzw. nach jeder Pulspause geprüft wird, ob ein weiter Laserpuls erzeugt werden soll. In der Regel sind für das Erzeugen eines nachfolgenden Laserpulses drei Bedingungen kumulativ zu erfüllen: 1.) Die Dauer der Pulspause (abhängig von der Soll-Leistung und der Soll-Frequenz) muss abgelaufen sein. 2.) Die Ausschaltschwelle muss erreicht sein, d.h. der Absolutwert der Intensität der Prozessstrahlung muss unter den Intensitäts-Schwellwert der gemittelten Intensität (unter die Prozesskurve) abgefallen sein. 3.) Das Abklingverhalten (bzw. als Maß für das Abklingverhalten der Gradient) der Intensität der Prozessstrahlung muss den Erwartungen für einen deterministischen bzw. unkritischen Bearbeitungsprozess eine hinreichende Zeit lang (d.h. eine bestimmte Anzahl an Messungen hintereinander) folgen.

Bei einer alternativen Ausführungsform ist die Auswerteeinrichtung ausgebildet, beim Detektieren eines spontanen Materialabtrags am Werkstück mindestens einen Laserparameter des gepulsten Laserstrahls und/oder mindestens einen Bearbeitungsparameter des Laserbearbeitungsprozesses erst beim einmaligen oder beim mehrmaligen Überschreiten eines Duldungs-Schwellwerts des Gradienten zu ändern, d.h. erst wenn die Zahl der Überschreitungen des Duldungs-Schwellwerts einen Duldungs-Grenzwert überschreitet. In diesem Fall wird gezielt ein spontaner Materialabtrag erzeugt, um den Bearbeitungsprozess zu beschleunigen. Sofern die Duldungsschwelle überschritten wird, kann die Leistungszufuhr zur Laserquelle ausgesetzt bzw. reduziert und/oder die Prozessgaszufuhr gedrosselt werden bzw. die Zusammensetzung des Prozessgases kann durch Beimischung anderer Gasarten verändert werden.

Bei einer weiteren Ausführungsform umfasst die Bearbeitungsmaschine zusätzlich eine Bearbeitungsdüse zum Ausrichten eines parallel zur Strahlrichtung des Laserstrahls verlaufenden Prozessgasstrahls auf den Bearbeitungsort am Werkstück, eine Hilfsgasdüse zum Ausrichten eines unter einem Winkel zur Strahlrichtung des Laserstrahls verlaufenden Hilfsgasstrahls auf den Bearbeitungsort, sowie eine Maschinen-Steuerungseinrichtung, die ausgebildet bzw. programmiert ist, die Hilfsgasdüse zu aktivieren, wenn die Auswerteeinrichtung einen spontanen Materialabtrag detektiert.

Wie weiter oben im Zusammenhang mit dem Verfahren dargestellt wurde, wird die Hilfsgasdüse aktiviert, um ein Hilfsgas an den Bearbeitungsort zuzuführen und das Prozessgas zu verdrängen. Bei der Verwendung eines Hilfsgases, das einen geringeren Sauerstoffanteil aufweist als das Prozessgas, kann auf diese Weise die Eisen-Sauerstoff-Reaktion unterbunden werden. Die Auswerteeinrichtung detektiert den spontanen Materialabtrag durch Vergleichen einer detektierten Lichtmenge bzw. Intensität der erfassten Prozessstrahlung mit einem Grenz- oder Referenzwert.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine schematische Darstellung einer Laserbearbeitungsmaschine,
- Fig. 2: eine schematische Darstellung einer Prozesslichtmesseinrichtung der Laserschneidmaschine von Fig. 1, die mit einer Auswerteeinrichtung in Verbindung steht,
- Fig. 3a,b: schematische Darstellungen eines stabilen bzw. eines instabilen Laserbearbeitungsprozesses,
- Fig. 4: eine schematische Darstellung eines Bearbeitungskopfs der Laserschneidmaschine mit einer Hilfsgasdüse zur Erzeugung unter einem Winkel zur Strahlrichtung des Laserstrahls verlaufenden Hilfsgasstrahls, sowie
- Fig. 5: eine schematische Darstellung von mehreren Bearbeitungsschritten eines Einstechvorgangs.

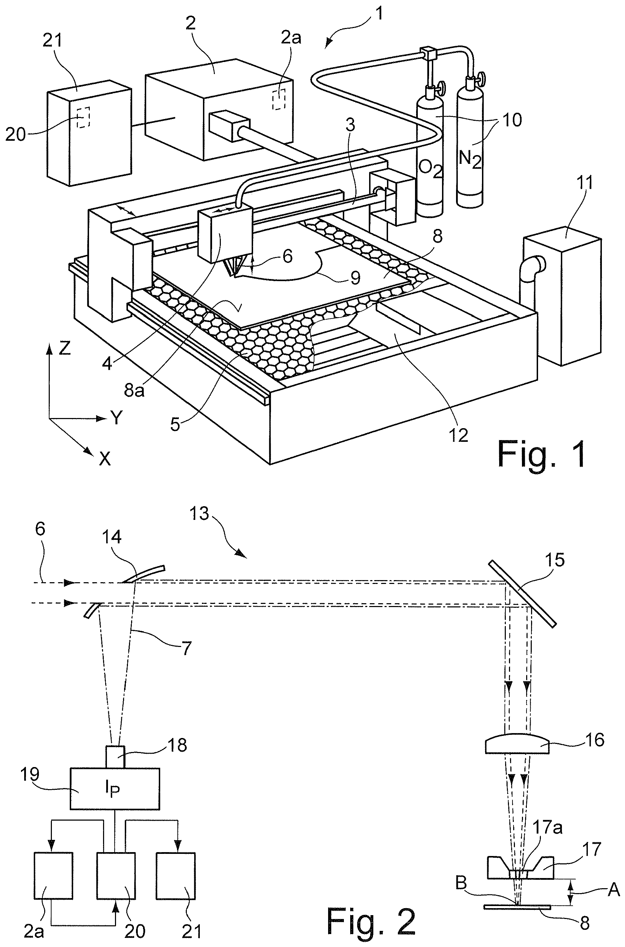

**Fig. 1** zeigt als Beispiel für eine Laserschneidmaschine **1** eine CO₂-Laserschneidmaschine zum Laserschneiden und/oder zum Laserbohren mit einer CO₂-Laserquelle **2,** einem Laserbearbeitungskopf **4** und einer Werkstückauflage **5.** Ein von der Laserquelle 2 bzw. einem in der Laserquelle 2 vorhandenen Resonator erzeugter Laserstrahl **6** wird mittels einer Strahlführung **3** von (nicht gezeigten) Umlenkspiegeln zum Laserbearbeitungskopf 4 geführt und in diesem fokussiert sowie mit Hilfe von in Fig. 1 ebenfalls nicht bildlich dargestellten Spiegeln senkrecht zur Oberfläche **8a** eines Werkstücks **8** ausgerichtet, d.h. die Strahlachse (optische Achse) des Laserstrahls 6 verläuft senkrecht zum Werkstück 8. Alternativ kann die Laserschneidmaschine einen Festkörperlaser als Laserquelle aufweisen, dessen Strahlung mit Hilfe eines Lichtleitkabels zum Laserbearbeitungskopf geführt wird.

Zum Laserschneiden des Werkstücks 8 wird mit dem Laserstrahl 6 zunächst eingestochen, d.h. das Werkstück 8 wird an einer Stelle punktförmig aufgeschmolzen oder oxidiert und die hierbei entstehende Schmelze wird ausgeblasen. Nachfolgend wird der Laserstrahl 6 über das Werkstück 8 bewegt, so dass ein durchgängiger Schnittspalt **9** entsteht, an dem entlang der Laserstrahl 6 das Werkstück 8 durchtrennt.

Sowohl das Einstechen als auch das Laserschneiden können durch Hinzufügen eines Gases unterstützt werden. Als Prozess- bzw. Schneidgase **10** können Sauerstoff, Stickstoff, Druckluft und/oder anwendungsspezifische Gase eingesetzt werden. Welches Gas letztendlich verwendet wird, ist davon abhängig, welche Materialien geschnitten und welche Qualitätsansprüche an das Werkstück gestellt werden. Entstehende Partikel und Gase können mithilfe einer Absaugeinrichtung **11** aus einer Absaugkammer **12** abgesaugt werden.

**Fig. 2** zeigt eine vereinfachte Darstellung einer Prozesslichtmesseinrichtung **13** für die Laserschneidmaschine 1 von Fig. 1. Die Prozesslichtmesseinrichtung 13 umfasst einen so genannten Scraper-Spiegel **14,** der ein Loch aufweist, durch das der Laserstrahl 6 für die Bearbeitung hindurch tritt. Der Laserstrahl 6 wir über einen adaptiven Spiegel **15** um 90° umgelenkt und mittels einer Fokussieroptik **16,** die im vorliegenden Fall als Linse ausgebildet ist und alternativ als Spiegel ausgebildet sein kann, durch eine Düsenöffnung **17a** einer Bearbeitungsdüse **17** hindurch auf das Werkstück 8 fokussiert. Prozessstrahlung 7 im infraroten Wellenlängenbereich, die bei der Bearbeitung an der Bearbeitungsposition B am Werkstück 8 entsteht wird mit Hilfe des Scraper-Spiegels 14 auf eine Messeinrichtung in Form einer Photo-Diode **18** gelenkt, welche die detektierte Strahlungsintensität in einen Strom umwandelt. Eine Messelektronik **19** misst den Strom der Photo-Diode 18 und stellt die gemessene Intensität **I**_{P} der Prozessstrahlung 7 in digitaler Form bereit. Die in Fig. 2 gezeigte Prozesslichtmesseinrichtung 13 ist typischer Weise in den Bearbeitungskopf 4 oder in den Strahlengang der Laserschneidmaschine 1 integriert. Es versteht sich, dass zur Auskopplung der Prozessstrahlung 7 an Stelle des Scraper-Spiegels 14 auch andere optische Elemente, beispielsweise ein dichroititscher Spiegel, verwendet werden können. Für die Detektion kann an Stelle der Photo-Diode 18 beispielsweise eine Kamera eingesetzt werden.

Die Prozesslichtmesseinrichtung 13, genauer gesagt die Messelektronik 19, steht mit einer Auswerteeinrichtung **20** in signaltechnischer Verbindung. Die Messelektronik 19 kann ggf. auch in die Auswerteeinrichtung 20 integriert sein. Die Auswerteeinrichtung 20 steht mit einer Maschinen-Steuerungseinrichtung **21** in signaltechnischer Verbindung, die den Einstechvorgang steuert und die weitere Steuerungsaufgaben für die Laserschneidmaschine 1 übernimmt. Wie in Fig. 1 gezeigt ist, kann die Auswerteeinrichtung 20 auch in die Steuerungseinrichtung 21 integriert sein. Die Auswerteeinrichtung 20 steht auch mit einer Laser-Steuerungseinrichtung **2a** in signaltechnischer Verbindung, die typischer Weise in die Laserquelle 2 integriert ist. Für die Kommunikation mit der Laser-Steuerungseinrichtung 2a und der Maschinen-Steuerungseinrichtung 21 weist die Auswerteeinrichtung geeignete Daten-Schnittstellen auf.

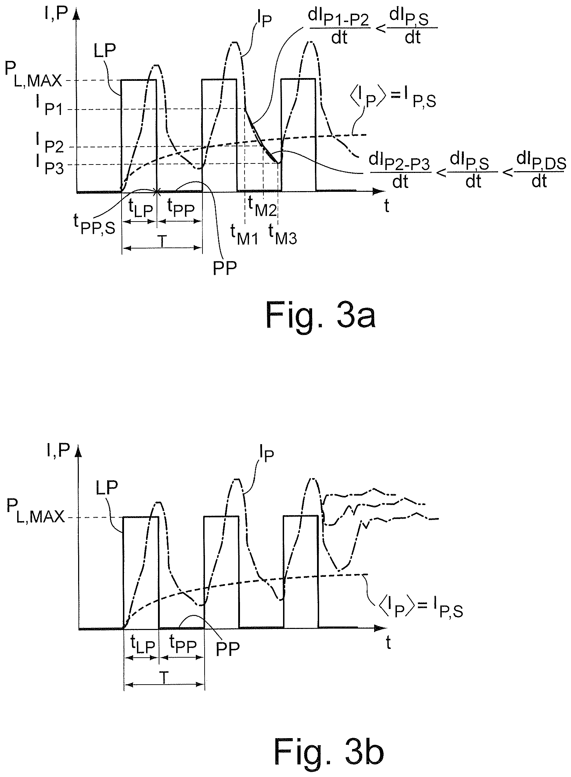

Wie in **Fig. 3a,b** gezeigt ist, ermittelt die Auswerteeinrichtung 20 den zeitlichen Verlauf der Intensität I_{P} der erfassten Prozessstrahlung 7 kontinuierlich bzw. quasi-kontinuierlich, d.h. mit hohen Abtastraten (Messraten) von beispielsweise. 100 Mikrosekunden zeitlichem Abstand zwischen den einzelnen Messzeitpunkten. Die Zuführung der Laserleistung P_{L} der Laserquelle 2 erfolgt gepulst mit einer Mehrzahl von aufeinanderfolgenden Laserpulsen LP, die von Pulspausen PP unterbrochen werden. Bei den Laserpulsen LP handelt es sich um Rechteckpulse, bei denen die Laserleistung P_{L} mit hoher Flankensteilheit auf einen (konstanten) Maximalwert **P**_{L,MAX} (z.B. mehrere Kilowatt) erhöht wird und mit entsprechend steiler Flanke wieder auf Null abfällt. Es versteht sich, dass auch andere Pulsformen möglich sind.

Um zu bestimmen, in welchem Zeitfenster bzw. Zeitintervall **t**_{PP} der erfassten Prozessstrahlung 7 eine Pulspause PP vorliegt und in welchem Zeitintervall **t**_{LP} ein Laserpuls LP erzeugt wird, greift die Auswerteeinrichtung 20 auf Informationen der Laser-Steuerungseinrichtung 2a zurück, in der die jeweiligen Zeitdauern sowie der exakte Startzeitpunkt (z.B. **t**_{PP,S} als Startzeitpunkt der Pulspause PP) und Endzeitpunkt des jeweiligen Zeitintervalls tpp, t_{LP} hinterlegt sind, um den gepulsten Laserstrahl 6 zu erzeugen. Es versteht sich, dass die Information über die Zeitfenster bzw. Zeitintervalle t_{PP}, t_{LP} auch aus der Pulsfrequenz bzw. der Periodendauer T der Pulssequenz sowie aus dem Tastverhältnis t_{PP} / T bestimmt werden können.

Anhand des zeitlichen Verlaufs bzw. des Abklingverhaltens der Prozessstrahlung 7 während der Pulspause PP kann in der Auswerteeinrichtung 20 ein spontaner Materialabtrag am Werkstück 8 detektiert werden. Hierzu wird in der Pulspause PP mehrfach der Gradient dI_{P1-P2}/dt; dI_{P2-P3}/dt, ... der Intensität I_{P} der Prozessstrahlung 7 zwischen zwei aufeinanderfolgenden Messzeitpunkten (z.B. t_{M1}, t_{M2} bzw. t_{M2}, t_{M3}) bestimmt, indem die Differenz I_{P2} - I_{P1} bzw. I_{P3} - I_{P2} der an den jeweiligen Messzeitpunkten t_{M1}, t_{M2} bzw. t_{M2}, t_{M3} gemessenen Intensitäten gebildet wird. Der zeitliche Abstand der Messzeitpunkte t_{M1}, t_{M2}, t_{M3}, ... ist hierbei konstant. Der auf diese Weise erzeugte Gradient dI_{P1-P2}/dt; dI_{P2-P3}/dt, ... wird mit einem vorgegebenen Gradienten-Schwellwert dI_{P,S}/dt verglichen, der typischer Weise bei einem stabilen, deterministischen Laserbearbeitungsprozess vorliegt. Es wird bestimmt, wie oft (insbesondere wie oft hintereinander) der Gradienten-Schwellwert dI_{P,S}/dt überschritten wird, d.h. wie oft der gemessene Gradient dI_{P1-P2}/dt, dI_{P2-P3}/dt, ... größer als der Gradienten-Schwellwert dI_{P,S}/dt ist (wobei die Gradienten ein negatives Vorzeichen aufweisen). Die Häufigkeit der Überschreitung, die ein Maß für die Zeitdauer der Überschreitung darstellt, wird in der Auswerteeinrichtung 20 mit einem zuvor festgelegten Grenzwert (d.h. einer vorgegebenen Zahl) verglichen.

In der Pulspause PP wird also geprüft, inwieweit sich der aktuell erfasste Wert der Intensität I_{P} der Prozessstrahlung 7 vom vorhergehenden Wert unterscheidet. Die Differenz aus dem aktuell erfassten Wert und dem vorhergehenden Wert kann durch den vorhergehenden Wert geteilt werden (z.B. (I_{P2} - I_{P1}) / I_{P1}), um eine relative Angabe für die Änderung der Intensität I_{P} zu erhalten. Wenn der Wert der Intensität I_{P} in dem betrachteten Zeitintervall (z.B. zwischen t_{M1} und t_{M2}) beispielsweise um weniger als 3% abgenommen hat, kann eine erste Stufe der Explosionserkennung aktiviert werden. Wird nun dieser kritische Gradient von - 3 % in der Folge mehrfach überschritten, d.h. ist die Intensitätsabnahme jeweils geringer, beispielsweise bei ca. -2%, so gilt eine Explosion bzw. ein kritischer Materialabtragprozess als erkannt.

Bei den drei gezeigten Laserpulsen LP von Fig. 3a nimmt die detektierte Prozessstrahlung 7 vor einem nachfolgenden Laserpuls LP jeweils einen minimalen Wert an, der ungefähr gleich groß ist, d.h. der in Fig. 3a gezeigte Prozess folgt der eingebrachten Laserleistung und ist somit im Wesentlichen deterministisch. Bei dem in Fig. 3a gezeigten stabilen Laserbearbeitungsprozess weist zudem der Gradient dI_{P}/dt während der Pulspause PP einen vergleichsweise großen negativen Wert auf (das bedeutet einen starken Abfall der detektierten Intensität I_{P}), der unterhalb des Gradienten-Schwellwerts dI_{P,S}/dt liegt, d.h. stärker negativ als der Gradienten-Schwellwert dI_{P,S}/dt ist. Der in Fig. 3b gezeigte Laserbearbeitungsprozess geht nach dem dritten Laserpuls LP in einen kritischen Zustand über. Der Gradient dI_{P}/dt nimmt während der Pulspause PP mehrfach einen nur gering negativen oder sogar einen positiven Wert an und liegt oberhalb des (stärker negativen) Gradienten-Schwellwerts dI_{P,S}/dt. Liegt die Anzahl der Schwellwert-Überschreitungen über einer in der Auswerteeinheit 20 gespeicherten Zahl, d.h. über einem Grenzwert, so wird ein kritischer Zustand des Laserprozesses bzw. ein spontaner Materialabtrag detektiert.

Um einen spontanen Materialabtrag zu detektieren, wird in einer Erweiterung des erfindungsgemäßen Verfahrens von der Auswerteeinrichtung 20 fortlaufend eine über die bisherige Dauer des Laserbearbeitungsprozesses gemittelte Intensität <I_{P}> der erfassten Prozessstrahlung 7 bestimmt (Prozesskurve), d.h. es wird beginnend beim Start des ersten Laserpulses LP, z.B. am Beginn des Einstechvorgangs, die an den jeweiligen (diskreten) Messzeitpunkten gemessene Prozessstrahlung 7 aufsummiert und durch die Zahl der Messzeitpunkte dividiert. Die Prozesskurve <I_{P}> wird kontinuierlich mit der gemessenen Intensität I_{P} in der Pulspause verglichen. Nur wenn die gemessene Intensität I_{P} am Ende der Pulspause PP unterhalb der Prozesskurve <I_{P}> liegt, ist der Laserbearbeitungsprozess stabil (vgl. Fig. 3a). Die Prozesskurve <I_{P}> bzw. deren Wert am Ende der Pulspause PP stellt somit einen weiteren Schwellwert I_{P,S} (Intensitäts-Schwellwert) für das Führen des Prozesses in einem stabilen Zustand dar, ist allerdings kein hinreichendes Kriterium dafür, dass der Prozess sich in einem stabilen Zustand befindet.

Der Wert der seit Prozessbeginn gemittelten Intensität <I_{P}> kann für den Vergleich mit der (momentanen) Intensität I_{P} der Prozessstrahlung 7 ggf. auch mit einem Faktor gewichtet werden, um Einflussfaktoren zu berücksichtigen, welche die Stabilität des Laserbearbeitungsprozesses bzw. den spontanen Materialabtrag beeinflussen. Dieser Wichtungsfaktor kann auch als Regelparameter dienen: So verringert beispielsweise ein Faktor von 0,3 die Gefahr, dass kritische Zustände im Prozessverlauf überhaupt erst entstehen. In diesem Fall wird abweichend von Fig. 3a,b als Intensitäts-Schwellwert I_{P,S} nicht der gemittelte Wert <I_{P}> sondern ein mit einem Faktor F gewichteter Wert F * <I_{P}> herangezogen Es besteht auch die Möglichkeit, die gemittelte Intensität <I_{P}> mit mehreren Faktoren zu gewichten, z.B. mit einem Faktor zur Anpassung an unterschiedliche Laserleistungen und zusätzlich mit einem "Qualitätsfaktor", der die Empfindlichkeit der Regelung beeinflusst.

Um den instabilen Laserbearbeitungsprozess von Fig. 3b zu stabilisieren, kann die Auswerteeinrichtung 20 auf den Laserbearbeitungsprozess einwirken, indem mindestens ein Laserparameter und/oder mindestens ein Bearbeitungsparameter beeinflusst bzw. geändert wird. Geeignete Laserparameter sind die Pulsdauer t_{LP} des bzw. der nachfolgenden Laserpulse LP sowie die Dauer t_{PP} der Pulspause PP, welche verringert bzw. erhöht werden können, um die eingestrahlte Laserleistung zu reduzieren. Beispielsweise kann die Dauer t_{PP} der Pulspause PP verlängert werden, bis die gemittelte Intensität <I_{P}> unter den Intensitäts-Schwellwert I_{P,S} abfällt und zusätzlich der Intensitäts-Gradient wieder auf einen sicheren Prozessverlauf deutet. Gegebenenfalls kann die Laserquelle 2 ausgeschaltet bzw. die Energiezufuhr unterbrochen werden, um den Bearbeitungsprozess zu stoppen.

Da das alleinige Aussetzen der Laserleistung oft nur sehr langsam eine Stabilisierung des Bearbeitungsprozesses bewirkt, kann zusätzlich mit Hilfe der Maschinen-Steuerungseinrichtung 21 ein Eingriff in den Bearbeitungsprozess erfolgen. So kann beispielsweise die Art bzw. das Mischungsverhältnis der verwendeten Prozessgase 10 verändert werden. Beispielsweise kann die dem Prozess zur Verfügung gestellte Menge an Sauerstoff reduziert werden, um dem Bearbeitungsprozess teilweise oder ggf. vollständig die aktive Komponente zu entziehen.

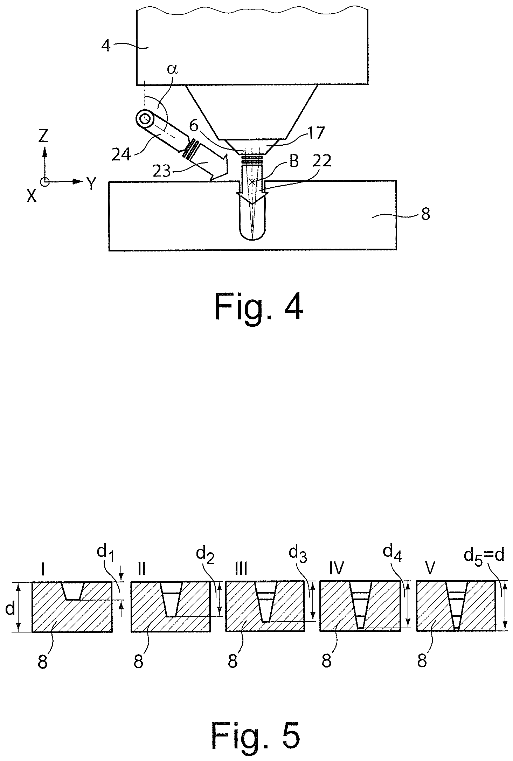

Alternativ kann, wie in Fig. 4 gezeigt ist, die Sauerstoffmenge am Bearbeitungsort B reduziert werden, indem die Maschinen-Steuerungseinrichtung 21 ein Querblasventil einer Hilfsgasdüse 24 ansteuert, die am Bearbeitungskopf 4 angebracht und die ausgebildet ist, einen schräg, d.h. unter einem Winkel α, der nicht gleich 0° oder 180° ist, zur Strahlrichtung Z des Laserstrahls 6, orientierten Hilfsgasstrahl 23 auf den Bearbeitungsort B zu richten. Der Winkel α liegt im gezeigten Beispiel bei ca. 135°, kann aber abhängig vom zur Verfügung stehenden Bauraum am dem Werkstück 8 zugewandten Ende des Bearbeitungskopfs 4 ggf. deutlich von diesem Wert abweichen. Die Maschinen-Steuerungseinrichtung 21 aktiviert die Hilfsgasdüse 24, wenn die Auswerteeinrichtung 20 einen spontanen Materialabbrand detektiert.

Der Hilfsgasstrahl 23 weist einen geringeren Sauerstoffanteil auf als ein Prozessgasstrahl **22,** der von der Bearbeitungsdüse 17 auf den Bearbeitungsort B ausgerichtet wird und der parallel bzw. koaxial zur Strahlrichtung Z des fokussierten Laserstrahls 6 verläuft. Der Hilfsgasstrahl 23 kann beispielsweise aus Stickstoff, Edelgas, einem Stickstoff-Sauerstoff-Gemisch (z.B. Druckluft) oder einem Edelgas-Sauerstoff-Gemisch bestehen. Der Prozessgasstrahl 22 besteht aus Sauerstoff oder einem Sauerstoff enthaltenden Gemisch mit einem höheren Sauerstoffanteil als der Hilfsgasstrahl 23.

Wird der Hilfsgasstrahl 23 mit höherem Druck als der Prozessgasstrahl 22 auf den Bearbeitungsort B gerichtet, so erfolgt eine Verdrängung des Prozessgases durch das Hilfsgas und ein effektives "Löschen" der Eisen-Sauerstoff-Reaktion. Mit Hilfe der in Fig. 4 gezeigten Anordnung kann schneller in den Prozess eingegriffen werden als durch eine Änderung des Prozessgases bzw. der Zusammensetzung des Prozessgasgemisches. Der Druck des Hilfsgasstrahls 23 kann gleichbleibend sein oder graduell oder kontinuierlich erhöht werden.

Wenn die zuvor detektierte Instabilität des Prozesses nicht zu groß ist, kann das Prozessgas bzw. dessen Zusammensetzung unverändert bleiben, so dass nach Abschaltung des Hilfsgasstrahls 23 der Bearbeitungsprozess schnell in seinen Ausgangszustand zurückkehrt. Bei großer Instabilität (starker und häufiger Überschreitung des Gradienten-Schwellwerts dI_{P,S} / dt) kann der Volumenstrom des Prozessgasstrahls 22 reduziert oder der Prozessgasstrahl 22 ausgeschaltet werden, um die Schnelligkeit des Eingriffs zu erhöhen.

Während des Einwirkens des Hilfsgasstrahls 23 erfolgt weiterhin die Detektion der Prozessstrahlung 7 und die Auswerteeinrichtung 20 bestimmt zeitlich aufeinander folgende Gradienten dI_{P1-P2}/dt, dI_{P2-P3}/dt, ... der Intensität I_{P} der Prozessstrahlung 7. Fällt die Häufigkeit der Überschreitungen des Gradienten-Schwellwerts dI_{P,S} / dt unter einen zuvor festgelegten Grenzwert, wird der Hilfsgasstrahl 23 wieder abgeschaltet.

Um die Prozesssicherheit zu erhöhen, kann zusätzlich in der Maschinen-Steuerungseinrichtung 21 eine Mindestzeitdauer für die Einwirkung des Hilfsgasstrahls 23 auf den Bearbeitungsort B hinterlegt sein. Der Hilfsgasstrahl 23 wird in diesem Fall von der Maschinen-Steuerungseinrichtung 21 frühestens abgeschaltet, wenn die Mindestzeitdauer abgelaufen ist, selbst wenn der Grenzwert bereits vor dem Ablauf der Mindestzeitdauer unterschritten wird.

Mit Hilfe der Maschinensteuerung 21 können auch die Folgen des spontanen Materialabtrags für dem Bearbeitungsort B benachbarte Bauelemente reduziert werden, beispielsweise für die Fokussierlinse 16 oder die Düse 17. Zu diesem Zweck kann der Arbeitsabstand **A** zwischen dem Bearbeitungskopf 4 bzw. der Düse 17 und dem Werkstück 8 erhöht werden, so dass heiße Partikel, die vom Bearbeitungsort B in Richtung auf den Bearbeitungskopf 4 geschleudert werden, eine zu geringe Reichweite haben, um diese Bauelemente zu erreichen.

Die Prozesslichtmesseinrichtung 13 in Kombination mit der Auswerteeinrichtung 20 kann auch dazu genutzt werden, einen Einstechprozess zu kontrollieren bzw. zu beherrschen, welcher mittels heftiger, aber limitierter und kontrollierter Energieeinbringung in das Werkstück 8 die Zeit minimiert, die für das Einstechen oder das Bohren eines Lochs benötigt wird, ohne dass die Qualität des Einstichs zu sehr gemindert wird. Bei diesem Einstech- bzw. Bohrprozess werden durch gezielte, hochenergetische Laserpulse in Kombination mit einem aktiven Prozessgas (wie z.B. Sauerstoff) sehr schnelle, spontane Materialabtragungen im Werkstück 8 hervorgerufen, wie nachfolgend anhand von **Fig. 5** erläutert wird.

Fig. 5 zeigt den Vorgang des Einstechens bzw. des Bohrens eines Loches in das Werkstück 8 in fünf aufeinander folgenden Bearbeitungsschritten I bis V. In Bearbeitungsschritt I erfolgt ein erster Materialabtrag mit kontrollierter Energieeinbringung, bei dem das Werkstück 8 am Bearbeitungsort B bis zu einer Einstechtiefe d₁ von beispielsweise ca. 20 % der Gesamtdicke d des Werkstücks 8 abgetragen wird. In einem zweiten bis vierten Bearbeitungsschritt II bis IV nimmt die Einstechtiefe d₂ bis d₅ schrittweise zu, bis im fünften Bearbeitungsschritt V die Einstechtiefe d₅ mit der Werkstückdicke d übereinstimmt und das Ende des Einstechvorgangs erreicht ist, d.h. ein Einstech- bzw. Bohrloch in dem Werkstück 8 gebildet ist. Es versteht sich, dass abhängig von den Eigenschaften des Werkstücks 8 und der Stärke der verwendeten Laserleistung mehr oder weniger Bearbeitungsschritte für den Einstechvorgang erforderlich sind.

Der Materialabtrag bzw. die teilweise Abtragung des Werkstücks 8 in den jeweiligen Bearbeitungsschritten I bis V erfolgt explosionsartig, d.h. es werden mehrere Explosionen gezielt nacheinander provoziert. Um die Zeit für das Einstechten zu minimieren, folgen die Bearbeitungsschritte I bis V bzw. die "explosionsgestützten" Teilabtragungen schnell aufeinander, d.h. Pulsfrequenz liegt in der Regel zwischen ca. 1 Hz und 5000 Hz. Die hierbei erzeugte Eigendynamik des Einstechprozesses führt zu einem spontanen Materialabtrag, der wie oben beschrieben detektiert werden kann.

Der Laserbearbeitungsprozess wird hierbei gezielt so gesteuert bzw. geregelt, dass ein spontaner Materialabtrag erfolgt, d.h. derart, dass der in Fig. 3b gezeigte Fall eintritt. In den Laserbearbeitungsprozess wird erst eingegriffen, wenn ein vorgegebener Duldungs-Gradient der Intensität I_{P} in der Pulspause PP (Duldungs-Schwellwert **dI**_{P,DS}/**dt** > dI_{P,S}/dt, vgl. Fig. 3a) einmal oder mehrfach überschritten wird, da in diesem Fall die Materialreaktion zu kritisch wird bzw. die Qualität des Einstechlochs nicht mehr der gewünschten Qualität entspricht. Der Duldungs-Schwellwert dI_{P,DS}/dt kann abhängig von der gewünschten Qualität der Bearbeitung, insbesondere des Einstichs, in seinem Betrag variiert werden, um unterschiedlich schnelle, sich in ihrer Qualität unterscheidende Einstichergebnisse zu erzielen.

Zusätzlich kann zur Bestimmung, ob in den Laserbearbeitungsprozess eingegriffen werden muss, auch festgelegt sein, dass der Duldungs-Schwellwert dI_{P,DS}/dt mit einer bestimmten Häufigkeit überschritten werden muss, dass also die Zahl der Überschreitungen über einem Duldungs-Grenzwert liegen muss. Weiterhin kann zur Beurteilung des Prozesses auch geprüft werden, ob die momentane Intensität I_{P} am Ende der Pulspause PP unter der gemittelten Intensität <I_{P}> der Prozessstrahlung 7 liegt, wobei die gemittelte Intensität <I_{P}> mit einem Duldungs-Faktor verrechnet werden kann. Durch den Duldungs-Faktor wird die Ansprechschwelle zum Eingreifen in den Prozess erhöht.

Mit Hilfe der Prozesslichtmesseinrichtung 13 bzw. mit Hilfe der Auswerteeinrichtung 20 und einem darauf aufbauenden Steuer- bzw. Regelalgorithmus kann der im Zusammenhang mit Fig. 5 beschriebene Einstechvorgang beherrschbar gemacht werden, d.h. es kann gezielt ein nicht deterministischer Prozessverlauf für das Einstechen genutzt werden.

Es versteht sich, dass das oben beschriebene Verfahren nicht nur bei dem in Zusammenhang mit Fig. 5 beschriebenen explosionsgestützten Einstech- bzw. Bohrvorgang vorteilhaft eingesetzt werden kann, sondern auch bei anderen Prozessen, bei denen eine gepulste Laserbearbeitung erfolgt, z.B. während eines sich an das Einstechen anschließenden Laserschneidvorgangs bzw. bei allen kritischen Aufheizprozessen, insbesondere wenn Sauerstoff als Prozessgas verwendet wird.

Das beschriebene Verfahren kann auch in erheblichem Maße zur Prozesssicherheit beitragen, insbesondere wenn dicke Werkstücke 8 bearbeitet werden sollen. Wird der Bearbeitungsprozess geeignet geregelt bzw. gesteuert, können sowohl das zu bearbeitende Werkstück-Material als auch die Maschinenkomponenten, die der Laserstrahlung bei einer spontanen Materialabtragung ausgesetzt sind, wesentlich weniger verschmutzt oder beschädigt werden.

## Patentansprüche

1. Verfahren zum Einstechen, Bohren oder Schneiden metallischer Werkstücke (8) in einem Laserbearbeitungsprozess, umfassend:
Fokussieren eines gepulsten Laserstrahls (6) auf einen Bearbeitungsort (B) am Werkstück (8),
Erfassen von vom Bearbeitungsort (B) ausgehender Prozessstrahlung (7),
**gekennzeichnet durch**
Ermitteln eines Zeitpunkts (t_{PP,S}), an dem auf einen Laserpuls (LP) des gepulsten Laserstrahls (6) eine Pulspause (PP) folgt,
Ermitteln der Intensität (I_{P1}, I_{P2}, I_{P3},...) der Prozessstrahlung (7) an mehreren aufeinander folgenden Zeitpunkten (t_{M1}, t_{M2}, t_{M3}, ...) während der Pulspause (PP), mehrfaches Bestimmen eines Gradienten (dI_{P1-P2}/dt, dI_{P2-P3}/dt,... ) der Intensität (I_{P}) der Prozessstrahlung (7) zwischen jeweils zwei der zeitlich aufeinander folgenden Zeitpunkte (t_{M1}, t_{M2}; t_{M2}, t_{M3}) und Vergleichen des Gradienten (dI_{P1-P2}/dt, dI_{P2-P3}/dt,...) mit einem Gradienten-Schwellwert (dI_{P,S}/dt), sowie Detektieren eines spontanen Materialabtrags am Werkstück (8), wenn die Zahl der Überschreitungen des Gradienten-Schwellwerts (dI_{P,S}/dt) über einem vorgegebenen Grenzwert liegt.

2. Verfahren nach Anspruch 1, bei dem fortlaufend eine über die bisherige Dauer des Laserbearbeitungsprozesses gemittelte Intensität (<I_{P}>) der erfassten Prozessstrahlung (7) bestimmt wird und zum Detektieren eines spontanen Materialabtrags die Intensität (I_{P}) der Prozessstrahlung (7) in der Pulspause (PP) mit einem von der gemittelten Intensität (<I_{P}>) abhängigen Intensitäts-Schwellwert (I_{P},s) verglichen wird.

3. Verfahren nach einem der vorhergehenden Ansprüche, bei dem beim Detektieren eines spontanen Materialabtrags mindestens ein Laserparameter (t_{LP}, tpp) des gepulsten Laserstrahls (6) geändert wird.

4. Verfahren nach Anspruch 3, bei dem beim Detektieren eines spontanen Materialabtrags ein erneutes Einwirken des gepulsten Laserstrahls (6) auf das Werkstück (8) verzögert oder unterbunden wird.

5. Verfahren nach einem der vorhergehenden Ansprüche, bei dem beim Detektieren eines spontanen Materialabtrags mindestens ein Bearbeitungsparameter (A) des Laserbearbeitungsprozesses geändert wird.

6. Verfahren nach einem der vorhergehenden Ansprüche, bei dem beim Detektieren eines spontanen Materialabtrags mindestens ein Laserparameter (t_{LP}, tpp) des gepulsten Laserstrahls (6) und/oder mindestens ein Bearbeitungsparameter (A) des Laserbearbeitungsprozesses erst beim einmaligen oder beim mehrfachen Überschreiten ein Duldungs-Schwellwerts (dI_{P,DS}/dt) des Gradienten (dI_{P1-P2}/dt, dI_{P2-P3}/dt,...) geändert wird.

7. Verfahren nach einem der vorhergehenden Ansprüche, weiter umfassend:
Ausrichten eines parallel zur Strahlrichtung (Z) des Laserstrahls (6) verlaufenden Prozessgasstrahls (22) auf den Bearbeitungsort (B),
wobei ein unter einem Winkel (α) zur Strahlrichtung (Z) des Laserstrahls (6) verlaufender Hilfsgasstrahl (23) auf den Bearbeitungsort (B) ausgerichtet wird,
wenn anhand der erfassten Prozessstrahlung (7) ein spontaner Materialabtrag detektiert wird.

8. Verfahren nach Anspruch 7, **dadurch gekennzeichnet, dass** der Prozessgasstrahl (22) ein Sauerstoff-Strahl und der Hilfsgasstrahl (23) ein Edelgasstrahl, ein Stickstoffstrahl oder ein Luftstrahl ist.

9. Verfahren nach einem der Ansprüche 7 oder 8, **dadurch gekennzeichnet, dass** der Hilfsgasstrahl (23) mit höherem Druck auf den Bearbeitungsort (B) gerichtet wird als der Prozessgasstrahl (22).

10. Verfahren nach einem der Ansprüche 7 bis 9, **dadurch gekennzeichnet, dass** beim Detektieren des spontanen Materialabtrags ein Volumenstrom des Prozessgasstrahls (22) reduziert wird.

11. Bearbeitungsmaschine (1) zum Einstechen, Bohren oder Schneiden von metallischen Werkstücken (8) in einem Laserbearbeitungsprozess, umfassend:
eine Laserquelle (2) zur Erzeugung eines gepulsten Laserstrahls (6),
eine Fokussiereinrichtung (16) zum Fokussieren des Laserstrahls (6) auf einen Bearbeitungsort (B) am Werkstück (8),
eine Messeinrichtung (18) zum Erfassen von Prozessstrahlung (7), die vom Bearbeitungsort (B) am Werkstück (8) ausgeht,
**gekennzeichnet durch**
eine Auswerteeinrichtung (20), die zur Bestimmung eines Zeitpunkts (t_{PP,S}), in dem auf einen Laserpuls (LP) des gepulsten Laserstrahls (6) eine Pulspause (PP) folgt, mit der Laserquelle (2) in Verbindung steht, wobei die Auswerteeinrichtung (20) zum Ermitteln der Intensität (I_{P1}, I_{P2}, I_{P3},...,) der erfassten Prozessstrahlung (7) an mehreren aufeinander folgenden Zeitpunkten (t_{M1}, t_{M2}, t_{M3}, ...) während der Pulspause (PP) ausgebildet ist, und wobei die Auswerteeinrichtung (20) ausgebildet ist, mehrfach zeitlich hintereinander einen Gradienten (dI_{P1-P2}/dt, dI_{P2}-_{P3}/dt,...) der Intensität (I_{P}) der Prozessstrahlung (7) zwischen jeweils zwei der zeitlich aufeinander folgenden Zeitpunkte (t_{M1}, t_{M2;} t_{M2}, t_{M3}) zu bestimmen und den Gradienten (dI_{P1-P2}/dt, dI_{P2-P3}/dt,...) mit einem Gradienten-Schwellwert (dI_{P,S}/dt) zu vergleichen, sowie die Zahl der Überschreitungen des Gradienten-Schwellwerts (dI_{P,S}/dt) mit einem vorgegebenen Grenzwert zu vergleichen, um einen spontanen Materialabtrag am Werkstück (8) zu detektieren.

12. Bearbeitungsmaschine nach Anspruch 11, bei welcher die Auswerteeinrichtung (20) ausgebildet ist, eine fortlaufend über die bisherige Dauer des Laserbearbeitungsprozesses gemittelte Intensität (<I_{P}>) der erfassten Prozessstrahlung (7) zu bestimmen und zum Detektieren des spontanen Materialabtrags die Intensität (I_{P}) der Prozessstrahlung (7) in der Pulspause (PP) mit einem von der gemittelten Leistung (<I_{P}>) abhängigen Intensitäts-Schwellwert (I_{P,S}) zu vergleichen.

13. Bearbeitungsmaschine nach einem der Ansprüche 11 oder 12, bei der die Auswerteeinrichtung (20) zur Beeinflussung mindestens eines Laserparameters (t_{LP}, t_{PP}) des gepulsten Laserstrahls (6) mit einer Steuerungseinrichtung (2a) der Laserquelle (2) und/oder zur Beeinflussung von Bearbeitungsparametern (A) des
Laserprozesses mit einer Maschinensteuerung (21) in Verbindung steht.

14. Bearbeitungsmaschine nach Anspruch 13, bei welcher die Auswerteeinrichtung (20) ausgebildet ist, beim Vorliegen eines spontanen Materialabtrags am Werkstück (8) mindestens einen Parameter des gepulsten Laserstrahls (6) und/oder mindestens einen Bearbeitungsparameter des Laserbearbeitungsprozesses zu verändern.

15. Bearbeitungsmaschine nach Anspruch 14, bei welcher die Auswerteeinrichtung (20) ausgebildet ist, beim Detektieren eines spontanen Materialabtrags am Werkstück (8) mindestens einen Parameter des gepulsten Laserstrahls (6) und/oder mindestens einen Bearbeitungsparameter (A) des Laserbearbeitungsprozesses erst beim einmaligen oder beim mehrfachen Überschreiten ein Duldungs-Schwellwerts (dI_{P,DS}/dt) des Gradienten (dI_{P1-P2}/dt, dI_{P2-P3}/dt,...) zu ändern.

16. Bearbeitungsmaschine (1) nach einem der Ansprüche 11 bis 15, weiter umfassend:
eine Bearbeitungsdüse (17) zum Ausrichten eines parallel zur Strahlrichtung (Z) des Laserstrahls (6) verlaufenden Prozessgasstrahls (22) auf den Bearbeitungsort (B) am Werkstück (8),
eine Hilfsgasdüse (24) zum Ausrichten eines unter einem Winkel (α) zur Strahlrichtung (Z) des Laserstrahls (6) verlaufenden Hilfsgasstrahls (23) auf den Bearbeitungsort (B), sowie
eine Maschinen-Steuerungseinrichtung (21), die ausgebildet ist, die Hilfsgasdüse (24) zu aktivieren, wenn die Auswerteeinrichtung (20) einen spontanen Materialabtrag am Werkstück (8) detektiert.

## Claims

1. Method for perforating, drilling or cutting metal workpieces (8) in a laser processing operation, comprising:
focusing a pulsed laser beam (6) onto a processing location (B) on a workpiece (8),
detecting process radiation (7) emitted from the processing location (B),
**characterized by**
determining a time (t_{PP,S}) at which a pulse pause (PP) follows a laser pulse (LP) of the pulsed laser beam (6),
determining the intensity (I_{P1}, I_{P2}, I_{P3}, ...) of the process radiation (7) at a plurality of sequential times (t_{M1}, t_{M2}, t_{M3}, ...) during the pulse pause (PP),
determining several times a gradient (dI_{P1-P2}/dt, dI_{P2-P3/}dt,...) of the intensity (Ip) of the process radiation (7) between in each case two of the temporally sequential times (t_{M1}, t_{M2}; t_{M2}, t_{M3}), and comparing the gradient (dI_{P1-P2}/dt, dI_{P2-P3}/dt,...) with a gradient threshold value (dI_{P,S}/dt), as well as
detecting a spontaneous material removal on the workpiece (8) when the number of times the gradient threshold value (dI_{P,S}/dt) has been exceeded is above a predetermined limit value.

2. Method according to claim 1, in which an intensity (<I_{P}>) of the detected process radiation (7) averaged over the previous duration of the laser processing operation is continuously determined and, to detect a spontaneous material
removal, the intensity (I_{P}) of the process radiation (7) in the pulse pause (PP) is compared with an intensity threshold value (I_{P,S}) which is dependent on the averaged intensity (<I_{P}>).

3. Method according to either of the preceding claims, in which, when a spontaneous material removal is detected, at least one laser parameter (t_{LP}, t_{PP}) of the pulsed laser beam (6) is changed.

4. Method according to claim 3, in which, when a spontaneous material removal is detected, renewed impact of the pulsed laser beam (6) on the workpiece (8) is delayed or prevented.

5. Method according to any one of the preceding claims, in which, when a spontaneous material removal is detected, at least one processing parameter (A) of the laser processing operation is changed.

6. Method according to any one of the preceding claims, in which, when a spontaneous material removal is detected, at least one laser parameter (t_{LP}, t_{PP}) of the pulsed laser beam (6) and/or at least one processing parameter (A) of the laser processing operation is/are changed only when a tolerance threshold value (dI_{P,DS}/dt) of the gradient (dI_{P1-P2}/dt, dI_{P2-P3}/dt,...) is exceeded once or several times.

7. Method according to any one of the preceding claims, further comprising:
orientating a process gas jet (22) which extends parallel with the beam direction (Z) of the laser beam (6) onto the processing location (B),
wherein an auxiliary gas jet (23) which extends at an angle (α) with respect to the beam direction (Z) of the laser beam (6) is orientated onto the processing location (B) when a spontaneous material removal is detected using the detected process radiation (7).

8. Method according to claim 7, **characterised in that** the process gas jet (22) is an oxygen jet and the auxiliary gas jet (23) is an inert gas jet, a nitrogen jet or an air jet.

9. Method according to any one of claims 7 or 8, **characterised in that** the auxiliary gas jet (23) is directed onto the processing location (B) at higher pressure than the process gas jet (22).

10. Method according to any one of claims 7 to 9, **characterised in that**, when the spontaneous material removal is detected, a volume flow of the process gas jet (22) is reduced.

11. Processing machine (1) for perforating, drilling or cutting metal workpieces (8) in a laser processing operation, comprising:
a laser source (2) for producing a pulsed laser beam (6),
a focusing device (16) for focusing the laser beam (6) onto a processing location (B) on a workpiece (8),
a measuring device (18) for detecting process radiation (7) which is emitted from the processing location (B) on the workpiece (8),
**characterised by** an evaluation device (20) which is connected to the laser source (2) in order to determine a time (t_{PP,S}) at which a pulse pause (PP) follows a laser pulse (LP) of the pulsed laser beam (6), the evaluation device (20) being constructed to determine the intensity (I_{P1}, I_{P2}, I_{P3}, ...) of the detected process radiation (7) at a plurality of sequential times (t_{M1}, t_{M2}, t_{M3}, ..) during the pulse pause (PP), and the evaluation device (20) being constructed to determine several times in succession a gradient (dI_{P1-P2}/dt, dI_{P2-P3}/dt,...) of the intensity (I_{P}) of the process radiation (7) between in each case two of the temporally sequential times (t_{M1}, t_{M2}; t_{M2}, t_{M3}), and to compare the gradient (dI_{P1-P2/}dt, dI_{P2-P3}/dt,...) with a gradient threshold value (dI_{P,S/}dt), and to compare the number of occurrences of the gradient threshold value (dI_{P,S/}dt) being exceeded with a predetermined limit value in order to detect a spontaneous material removal on the workpiece (8).

12. Processing machine according to claim 11, in which the evaluation device (20) is constructed to continuously determine an intensity (<I_{P}>) of the detected process radiation (7), which intensity has been averaged over the previous duration of the laser processing operation, and, to detect the spontaneous material removal, to compare the intensity (I_{P}) of the process radiation (7) in the pulse pause (PP) with an intensity threshold value (I_{P,S}) which is dependent on the averaged intensity (<I_{P}>).

13. Processing machine according to either claim 11 or claim 12, in which the evaluation device (20) is connected to a control device (2a) of the laser source (2) in order to influence at least one laser parameter (t_{LP}, t_{PP}) of the pulsed laser beam (6) and/or to a machine control unit (21) in order to influence processing parameters (A) of the laser process.

14. Processing machine according to claim 13, in which the evaluation device (20) is constructed, when a spontaneous material removal is present on the workpiece (8), to change at least one parameter of the pulsed laser beam (6) and/or at least one processing parameter of the laser processing operation.

15. Processing machine according to claim 14, in which the evaluation device (20) is constructed, when a spontaneous material removal is detected on the workpiece (8), to change at least one parameter of the pulsed laser beam (6) and/or at least one processing parameter (A) of the laser processing operation only when a tolerance threshold value (dI_{P,DS/}dt) of the gradient (dI_{P1-P2}/dt, dI_{P2-P3}/dt,...) has been exceeded once or several times.

16. Processing machine (1) according to any one of the claims 11 to 15, further comprising:
a processing nozzle (17) for orientating a process gas jet (22) which extends parallel with the beam direction (Z) of the laser beam (6) onto the processing location (B) on the workpiece (8),
an auxiliary gas nozzle (24) for orientating an auxiliary gas jet (23) which extends at an angle (α) with respect to the beam direction (Z) of the laser beam (6) onto the processing location (B), as well as
a machine control device (21) which is constructed to activate the auxiliary gas nozzle (24) when the evaluation device (20) detects a spontaneous material removal on the workpiece (8).

## Revendications

1. Procédé pour perforer, percer ou découper des pièces métalliques (8) par un processus d'usinage au laser, comprenant :
Focaliser un faisceau laser pulsé (6) sur un emplacement d'usinage (B) sur la pièce (8),
enregistrer du rayonnement de traitement (7) provenant de l'emplacement d'usinage (B),
**caractérisé par**
déterminer un instant (t_{PP,S}) correspondant à une pause d'impulsion (PP) succédant à une impulsion (LP) du faisceau laser pulsé (6),
déterminer l'intensité (I_{P1}, I_{P2}, I_{P3}, ...) du rayonnement de traitement (7) à plusieurs instants successifs (t_{M1}, t_{M2}, t_{M3}, ...) pendant la pause d'impulsion (PP), déterminer, de manière répétée, un gradient (dI_{P1-P2}/dt, dI_{P2-P3}/dt, ...) de l'intensité (I_{P}) du rayonnement de traitement (7) entre chaque fois deux des instants (t_{M1}, t_{M2} ; t_{M2}, t_{M3}) qui se succèdent dans le temps, et comparer le gradient (dI_{P1-P2}/dt, dI_{P2-P3}/dt, ...) à une valeur de seuil de gradient (dI_{P,S}/dt),
et détecter un enlèvement spontané de matière sur la pièce (8) lorsque le nombre de dépassements de la valeur de seuil de gradient (dI_{P,S}/dt) est supérieur à une valeur limite prédéterminée.

2. Procédé selon la revendication 1, selon lequel on détermine en continu une intensité (<I_{P}>) du rayonnement de traitement (7) enregistré en moyenne sur la durée du processus d'usinage au laser jusqu'alors, et, afin de détecter un enlèvement spontané de matière, on compare l'intensité (I_{P}) du rayonnement de traitement (7) pendant la pause d'impulsion (PP) à une valeur de seuil d'intensité (I_{P,S}) fonction de l'intensité moyenne (<I_{P}>).

3. Procédé selon l'une des revendications précédentes, selon lequel, lors de la détection d'un enlèvement spontané de matière, on modifie au moins un paramètre laser (t_{LP}, t_{PP}) du faisceau laser pulsé (6).

4. Procédé selon la revendication 3, selon lequel, lors de la détection d'un enlèvement spontané de matière, on retarde ou empêche une nouvelle action du faisceau laser pulsé (6) sur la pièce (8).

5. Procédé selon l'une des revendications précédentes, selon lequel, lors de la détection d'un enlèvement spontané de matière, on modifie au moins un paramètre d'usinage (A) du processus d'usinage au laser.

6. Procédé selon l'une des revendications précédentes, selon lequel, lors de la détection d'un enlèvement spontané de matière, on ne modifie au moins un paramètre laser (t_{LP}, tpp) du faisceau laser pulsé (6) et/ou au moins un paramètre d'usinage (A) du processus d'usinage au laser qu'en cas de dépassement unique ou répété d'une valeur de seuil de tolérance (dI_{P,DS}/dt) du gradient (dI_{P1-P2}/dt, dI_{P2-P3}/dt, ...).

7. Procédé selon l'une des revendications précédentes, comprenant en outre :
diriger sur l'emplacement d'usinage (B) un jet de gaz de traitement (22) s'étendant parallèlement à la direction (Z) du faisceau laser (6),
sachant qu'un jet de gaz auxiliaire (23), s'étendant sous un angle (α) par rapport à la direction (Z) du faisceau laser (6), est dirigé sur l'emplacement d'usinage (B) lorsqu'un enlèvement spontané de matière est détecté à l'aide du rayonnement de traitement enregistré (7).

8. Procédé selon la revendication 7, **caractérisé en ce que** le jet de gaz de traitement (22) est un jet d'oxygène et le jet de gaz auxiliaire (23) un jet de gaz rare, un jet d'azote ou un jet d'air.

9. Procédé selon l'une des revendications 7 ou 8, **caractérisé en ce que** le jet de gaz auxiliaire (23) est dirigé sur l'emplacement d'usinage (B) avec une pression plus élevée que le jet de gaz de traitement (22).

10. Procédé selon l'une des revendications 7 à 9, **caractérisé en ce que**, lors de la détection d'un enlèvement spontané de matière, on réduit un débit volumique du jet de gaz de traitement (22).

11. Machine d'usinage (1) pour perforer, percer ou découper des pièces métalliques (8) par un processus d'usinage au laser, comprenant :
une source laser (2) pour produire un faisceau laser pulsé (6),
un dispositif de focalisation (16) pour focaliser le faisceau laser (6) sur un emplacement d'usinage (B) sur la pièce (8),
un dispositif de mesure (18) pour enregistrer le rayonnement de traitement (7) provenant de l'emplacement d'usinage (B) sur la pièce (8),
**caractérisé par**
un dispositif d'évaluation (20), qui est relié à la source laser (2) afin de déterminer un instant (t_{PP,S}) correspondant à une pause d'impulsion (PP) succédant à une impulsion (LP) du faisceau laser pulsé (6), sachant que le dispositif d'évaluation (20) est conçu pour déterminer l'intensité (I_{P1}, I_{P2}, I_{P3}, ...) du rayonnement de traitement enregistré (7) à plusieurs instants successifs (t_{M1}, t_{M2}, t_{M3}, ...) pendant la pause d'impulsion (PP), et
sachant que le dispositif d'évaluation (20) est conçu pour déterminer, de manière répétée successivement dans le temps, un gradient (dI_{P1-P2}/dt, dI_{P2-P3}/dt, ...) de l'intensité (I_{P}) du rayonnement de traitement (7) entre chaque fois deux des instants (t_{M1}, t_{M2} ; t_{M2}, t_{M3}) qui se succèdent dans le temps, et pour comparer le gradient (dI_{P1-P2}/dt, dI_{P2-P3}/dt, ...) à une valeur de seuil de gradient (dI_{P,S}/dt), ainsi que pour comparer le nombre de dépassements de la valeur de seuil de gradient (dI_{P,S}/dt) à une valeur limite prédéterminée, afin de détecter un enlèvement spontané de matière sur la pièce (8).

12. Machine d'usinage selon la revendication 11, dans laquelle le dispositif d'évaluation (20) est conçu pour déterminer une intensité (<I_{P}>) du rayonnement de traitement (7) enregistré en moyenne en continu sur la durée du processus d'usinage au laser jusqu'alors, et, afin de détecter l'enlèvement spontané de matière, pour comparer l'intensité (I_{P}) du rayonnement de traitement (7) pendant la pause d'impulsion (PP) à une valeur de seuil d'intensité (I_{P,S}) fonction de l'intensité moyenne (<I_{P}>).

13. Machine d'usinage selon l'une des revendications 11 ou 12, dans laquelle le dispositif d'évaluation (20) est relié à un dispositif de commande (2a) de la source laser (2) afin d'agir sur au moins un paramètre laser (t_{LP}, tpp) du faisceau laser pulsé (6), et/ou à une commande de machine (21) afin d'agir sur des paramètres d'usinage (A) du processus au laser.

14. Machine d'usinage selon la revendication 13, dans laquelle le dispositif d'évaluation (20) est conçu pour modifier au moins un paramètre du faisceau laser pulsé (6) et/ou au moins un paramètre d'usinage du processus d'usinage au laser en présence d'un enlèvement spontané de matière sur la pièce (8).

15. Machine d'usinage selon la revendication 14, dans laquelle le dispositif d'évaluation (20) est conçu pour, lors de la détection d'un enlèvement spontané de matière sur la pièce (8), ne modifier au moins un paramètre du faisceau laser pulsé (6) et/ou au moins un paramètre d'usinage (A) du processus d'usinage au laser qu'en cas de dépassement unique ou de dépassement répété d'une valeur de seuil de tolérance (dI_{P,DS}/dt) du gradient (dI_{P1-P2}/dt, dI_{P2-P3}/dt, ...).

16. Machine d'usinage (1) selon l'une des revendications 11 à 15, comprenant en outre :
une buse d'usinage (17) pour diriger sur l'emplacement d'usinage (B) sur la pièce (8) un jet de gaz de traitement (22) s'étendant parallèlement à la direction (Z) du faisceau laser (6),
une buse de gaz auxiliaire (24) pour diriger sur l'emplacement d'usinage (B) un jet de gaz auxiliaire (23) s'étendant sous un angle (α) par rapport à la direction (Z) du faisceau laser (6),
et un dispositif (21) de commande de machine, qui est conçu pour activer la buse de gaz auxiliaire (24) lorsque le dispositif d'évaluation (20) détecte un enlèvement spontané de matière sur la pièce (8).
